# DEMANDE DE BREVET EUROPEEN

(11) **EP 4 663 916 A1**
(43) Date de publication de la demande: **17.12.2025**
(21) Numéro de dépôt: 25180956.2
(22) Date de dépôt: 05.06.2025
(51) Int. Cl.: F02C 7/045, F02K 1/82, B29D 24/00

(54) **PANNEAU D ATTÉNUATION ACOUSTIQUE COMPRENANT AU MOINS UN RENFORT EN C MAINTENU PAR AU MOINS UN NOYAU EXPANSIBLE ET PROCÉDÉ DE FABRICATION D'UN TEL PANNEAU**

(30) Priorité: 10.06.2024 FR 2406082
(71) Demandeur: Airbus SAS, 31700 Blagnac Cedex (FR)
(72) Inventeur: RAVISE, Florian, 17300 ROCHEFORT (FR); METAYER, Arnaud, 17300 ROCHEFORT (FR); DOUSSET, Julien, 17300 ROCHEFORT (FR); COUVET, Marc, 17300 ROCHEFORT (FR); MENAY, Hassan, 17300 ROCHEFORT (FR)
(74) Mandataire: Fantin, Laurent

(57) **Abrégé**

L'invention a pour objet un panneau d'atténuation acoustique comportant au moins une couche acoustique résistive (42), au moins une couche réflectrice (46), au moins une structure alvéolaire (44) et au moins un renfort en C (50) intercalés entre les couches acoustiquement résistive et réflectrice (42, 46)ainsi qu'au moins un noyau expansible (52), positionné entre les première et deuxième ailes du renfort en C (50), qui augmente de volume lors d'un cycle de polymérisation. Grâce à ce noyau expansible (52), il n'est plus nécessaire de prévoir deux cycles de polymérisation dont un cycle permettant de rigidifier le renfort en C (50).

L'invention a également pour objet un procédé de fabrication d'un tel panneau.

## Description

La présente demande se rapporte à un panneau d'atténuation acoustique comprenant au moins un renfort en C maintenu par au moins un noyau expansible ainsi qu'à un procédé de fabrication d'un tel panneau.

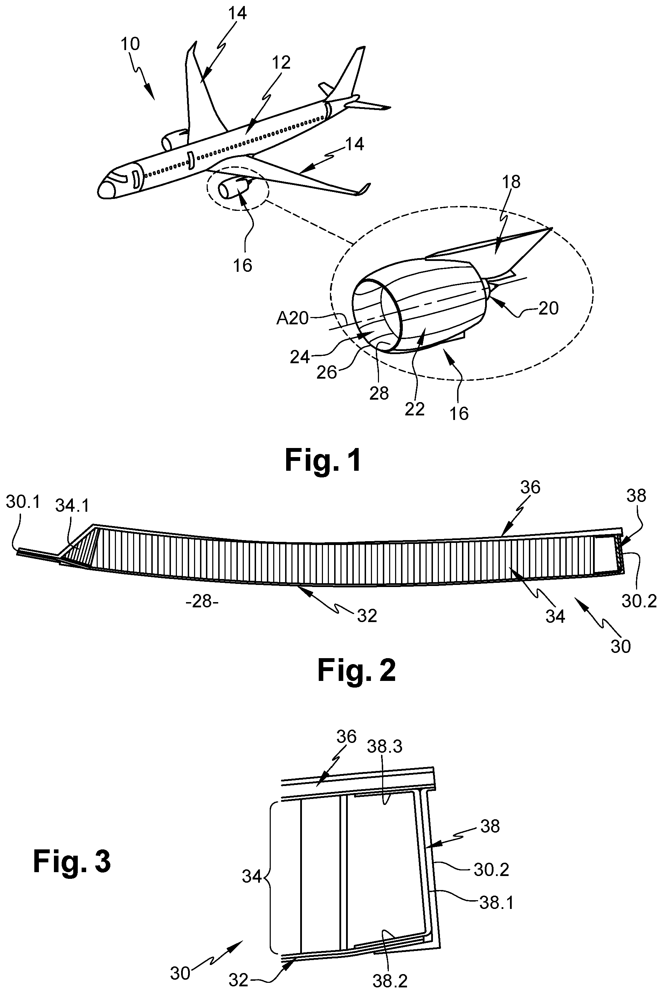

Selon un mode de réalisation visible sur la figure 1, un aéronef 10 comprend un fuselage 12, des ailes 14 positionnées de part et d'autre du fuselage 12 ainsi que plusieurs ensembles de propulsion 16 positionnés sous les ailes 14 et reliés à ces dernières par des mâts 18. Chaque ensemble de propulsion 16 comprend une motorisation 20 ainsi qu'une nacelle 22 entourant la motorisation 20 et permettant notamment de canaliser un flux d'air entrant en direction de la motorisation 20.

La motorisation 20 présente un axe de rotation A20. Pour la suite de la description, une direction longitudinale est une direction parallèle à l'axe de rotation A20. Un plan longitudinal est un plan contenant l'axe de rotation A20. Une direction radiale est perpendiculaire à l'axe de rotation A20.

Chaque nacelle 22 comprend, à l'avant, une entrée d'air 24 comportant une lèvre 26, qui présente une forme en C en coupe dans un plan longitudinal, ainsi qu'un conduit intérieur 28 qui prolonge la lèvre 26 à l'intérieur de la nacelle 22 et canalise le flux d'air entrant en direction de la motorisation 20.

Selon une configuration, le conduit intérieur 28 comprend au moins un panneau d'atténuation acoustique 30 (illustré sur la figure 2) qui s'étend entre des bords avant et arrière 30.1, 30.2 et comporte, en s'écartant de l'axe de la motorisation A20, au moins une couche acoustiquement résistive 32 poreuse, au moins une structure alvéolaire 34 ainsi qu'une couche réflectrice 36 (non poreuse ou étanche).

Selon un mode de réalisation, au niveau du bord avant 30.1, la structure alvéolaire 34 comprend un renfort alvéolaire 34.1 qui présente une section triangulaire ou trapézoïdale. En complément, la couche réflectrice 36 est plaquée contre la couche acoustiquement résistive 32 et reliée à cette dernière. Au niveau du bord arrière 30.2, le panneau d'atténuation acoustique 30 comprend un renfort en C 38 qui présente une âme 38.1 ainsi que deux ailes 38.2, 38.3 situées aux extrémités de l'âme 38.1, une première aile 38.2 étant plaquée contre la couche acoustiquement résistive 32 et reliée à cette dernière, la deuxième aile 38.3 étant plaquée contre la couche réflectrice 36 et reliée à cette dernière.

Selon une configuration, le panneau d'atténuation acoustique est essentiellement en matériau composite. Dans ce cas, un procédé de fabrication d'un panneau d'atténuation acoustique comprend une première étape de pose d'une couche acoustiquement résistive 32 sur un premier moule, une étape d'enroulement d'un fil autour de la couche acoustiquement résistive 32 ainsi qu'une étape de mise en place d'un renfort en C.

En suivant, le procédé comprend une étape de mise en place d'un outillage de polymérisation ainsi qu'un premier cycle de polymérisation de la couche acoustiquement résistive 32 et du renfort en C 38.

Le procédé comprend également une étape d'obtention d'une structure alvéolaire 34, une étape de mise en place de ladite structure alvéolaire 34 sur la couche acoustiquement résistive 32 déjà au moins partiellement polymérisée, une étape de drapage de la couche réflectrice 36 puis un deuxième cycle de polymérisation visant à durcir et à relier la couche acoustiquement résistive 32 bobinée, le renfort en C 38, la structure alvéolaire 34 ainsi que la couche réflectrice 36.

Le premier cycle de polymérisation confère au renfort en C 38 une certaine rigidité lui permettant de pouvoir reprendre les efforts de compression qui tendent à rapprocher la couche réflectrice 36 et la couche acoustiquement résistive 32 lors du deuxième cycle de polymérisation.

Ce procédé de fabrication d'un panneau d'atténuation acoustique n'est pas satisfaisant car la présence de deux cycles de polymérisation conduit à augmenter le temps et la consommation d'énergie nécessaires pour la fabrication du panneau. Par ailleurs, l'assemblage du premier sous-ensemble polymérisé après le premier cycle de polymérisation, de la structure alvéolaire 34 et de la couche réflectrice 36 impose l'utilisation de matériaux composites spécifiques, notamment de matériaux composites thermoplastiques, et/ou la présence d'éléments de jonction intercalés entre d'une part la couche acoustiquement résistive 32 et le renfort en C 38 déjà polymérisés et d'autre part la structure alvéolaire 34 et la couche réflectrice 36 pour obtenir une liaison solide entre ces éléments lors du deuxième cycle de polymérisation.

La présente invention vise à remédier à tout ou partie des inconvénients de l'art antérieur.

A cet effet, l'invention a pour objet un panneau d'atténuation acoustique comportant au moins une couche acoustique résistive, au moins une couche réflectrice ainsi qu'au moins une structure alvéolaire et au moins un renfort en C intercalés entre les couches acoustiquement résistive et réflectrice, ledit renfort en C comportant une âme ainsi que des première et deuxième ailes en contact respectivement avec les couches acoustiquement résistive et réflectrice.

Selon l'invention, le panneau d'atténuation acoustique comprend au moins un noyau expansible positionné entre les première et deuxième ailes du renfort en C et configuré pour occuper un premier état non expansé, à une première température, dans lequel le noyau expansible occupe un premier volume ainsi qu'un deuxième état expansé, à une deuxième température supérieure à la première température, dans lequel le noyau expansible occupe un deuxième volume plus important que le premier volume.

Le noyau expansible empêche le renfort en C de se déformer et lui permet de reprendre les efforts de compression tendant à rapprocher la couche réflectrice et la couche acoustiquement résistive lors du cycle de polymérisation. Par conséquent, il n'est pas nécessaire de prévoir deux cycles de polymérisation dont un premier cycle pour rigidifier le renfort en C. Le fait de ne prévoir qu'un cycle de polymérisation permet de réduire le temps et les coûts de fabrication.

Selon une autre caractéristique, le noyau expansible présente, dans le premier état, des formes épousant celles de l'âme et des première et deuxième ailes du renfort en C.

Selon une autre caractéristique, le noyau expansible comporte, dans le premier état, une section sensiblement rectangulaire qui présente une longueur sensiblement égale à un écartement entre les première et deuxième ailes ainsi qu'une largeur sensiblement égale à celle des première et deuxième ailes.

Selon une autre caractéristique, le panneau d'atténuation acoustique comprend plusieurs noyaux expansibles mis bout à bout.

Selon une autre caractéristique, au moins un noyau expansible est réalisé à partir d'un matériau solide comme une mousse expansible.

Selon une autre caractéristique, au moins un noyau expansible comprend au moins une vessie contenant un fluide expansible.

Selon une autre caractéristique, au moins un noyau expansible est positionné de manière permanente dans le panneau d'atténuation acoustique.

Selon une autre caractéristique, la première température est égale à une température ambiante, de l'ordre de 20°C, et la deuxième température est égale à une température de polymérisation supérieure ou égale à 100 °C.

L'invention a également pour objet un procédé de fabrication d'un panneau d'atténuation acoustique selon l'une des caractéristiques précédentes.

Ce procédé de fabrication comprend une étape de mise en place d'au moins une couche acoustiquement résistive, d'au moins un renfort en C, d'au moins une structure alvéolaire et d'au moins une couche réflectrice, chaque structure alvéolaire et chaque renfort en C étant intercalés entre les couches acoustiquement résistive et réflectrice, une étape de mise en place d'au moins un outillage de polymérisation, un cycle de polymérisation ainsi qu'une étape de démoulage. Selon l'invention, le procédé comprend une étape de mise en place d'au moins un noyau expansible entre les première et deuxième ailes du renfort en C préalablement au cycle de polymérisation, ledit noyau expansible étant configuré pour occuper un premier état non expansé, à une première température, dans lequel le noyau expansible occupe un premier volume ainsi qu'un deuxième état expansé, à une deuxième température supérieure à la première température, dans lequel le noyau expansible occupe un deuxième volume plus important que le premier volume.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef et d'un ensemble de propulsion illustrant un mode de réalisation,
- La figure 2 est une coupe longitudinale d'un panneau d'atténuation acoustique illustrant un mode de réalisation de l'art antérieur,
- La figure 3 est une coupe longitudinale d'une partie arrière du panneau d'atténuation acoustique visible sur la figure 2,
- La figure 4 est une coupe longitudinale d'un panneau d'atténuation acoustique illustrant un mode de réalisation de l'invention,
- La figure 5 est une coupe longitudinale d'une partie arrière du panneau d'atténuation acoustique visible sur la figure 4,
- La figure 6 est une coupe longitudinale d'une couche acoustiquement résistive, d'un renfort arrière et d'un noyau expansible illustrant un mode de réalisation de l'invention.

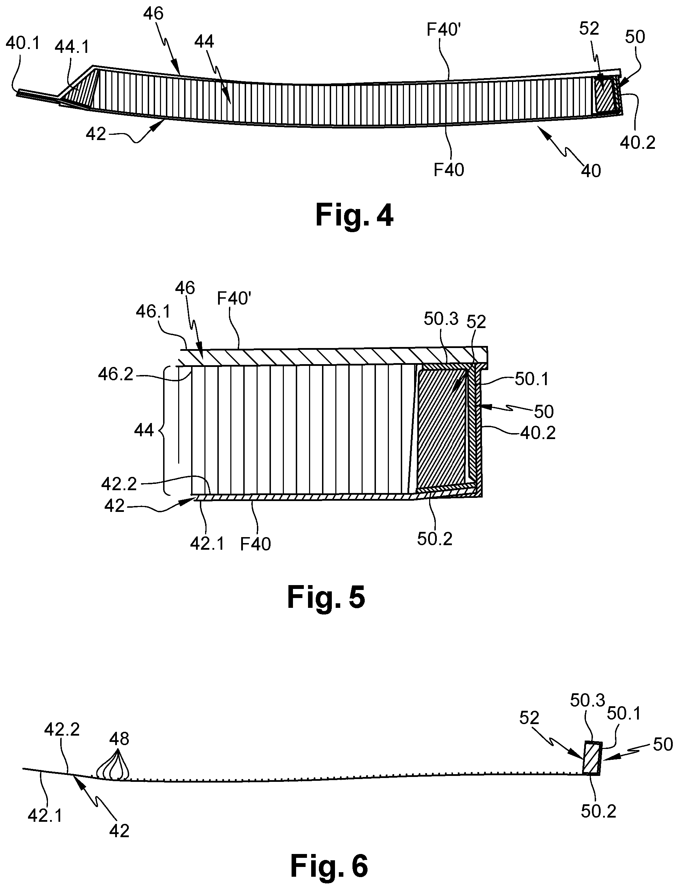

Selon un mode de réalisation visible sur les figures 4 et 5, un panneau d'atténuation acoustique 40 s'étend entre des première et deuxième faces F40, F40' décalées selon une première direction ainsi que des bords avant et arrière 40.1, 40.2 décalés selon une deuxième direction. En fonctionnement, la première face F40 est en contact avec un environnement dans lequel sont présentes des ondes sonores.

Selon une application, un aéronef comprend au moins un panneau d'atténuation acoustique 40, notamment au niveau d'une entrée d'air d'une nacelle d'un ensemble de propulsion. Dans ce cas, les première et deuxième directions correspondent respectivement aux directions radiale et longitudinale de l'ensemble de propulsion.

Bien entendu, l'invention n'est pas limitée à cette application pour le panneau d'atténuation acoustique 40.

Le panneau d'atténuation acoustique 40 comporte, en s'écartant de la première face F40, au moins une couche acoustiquement résistive 42 poreuse, au moins une structure alvéolaire 44 ainsi qu'au moins une couche réflectrice 46.

La couche acoustiquement résistive 42 présente une première face 42.1 formant la première face F40 du panneau d'atténuation acoustique 40 ainsi qu'une deuxième face 42.2 opposée à la première face 42.1 et orientée vers la structure alvéolaire 44.

Selon un agencement, la couche acoustiquement résistive 42 est tubulaire et conformée comme un conduit intérieur d'une entrée d'air. En variante, la couche acoustiquement résistive 42 est sensiblement plane ou correspond à une portion de cylindre. Bien entendu, l'invention n'est pas limitée à ces agencements.

Selon une configuration, la couche acoustiquement résistive 42 comprend au moins un fil 48 (visible sur la figure 6) en contact avec la deuxième face 42.2 de la couche acoustiquement résistive 42. Par fil, on entend pour la présente demande un unique fil ou plusieurs fils toronnés par exemple.

Selon un mode opératoire, le fil 48 est enroulé sur la deuxième face 42.2 de la couche acoustiquement résistive 42 lorsque cette dernière est tubulaire. Ce fil 48 peut être autoadhésif pour renforcer la liaison entre la couche acoustiquement résistive 42 et la structure alvéolaire 44. En variante, le fil 48 pourrait être remplacé par au moins un pli d'accroche et/ou au moins une bande autoadhésive ou tout autre élément favorisant la liaison entre la couche acoustiquement résistive 42 et la structure alvéolaire 44.

Selon un mode de réalisation, la couche acoustiquement résistive 42 est une plaque perforée en matériau thermoplastique. Bien entendu, l'invention n'est pas limitée à ce mode de réalisation. Ainsi, la couche acoustiquement résistive 42 peut être métallique, en matériau composite ou être constituée d'un mélange d'éléments en matériau composite, métallique, plein, tissé. A titre indicatif, la couche acoustiquement résistive 42 présente une épaisseur de l'ordre de 0,3 mm à quelques millimètres près.

La couche réflectrice 46 présente une première face 46.1 formant la deuxième face F40' du panneau d'atténuation acoustique 40 ainsi qu'une deuxième face 46.2 opposée à la première face et orientée vers la structure alvéolaire 44.

Selon un mode de réalisation, la couche réflectrice 36 peut être métallique, en matériau composite ou être constituée d'un mélange d'éléments en matériau composite et métallique. A titre indicatif, la couche réflectrice 36 présente une épaisseur de l'ordre de quelques dixièmes de millimètre à quelques millimètres.

Selon les modes de réalisation, le panneau d'atténuation acoustique 40 peut comprendre une unique structure alvéolaire 44 ou plusieurs structures alvéolaires 44 superposées et séparées par des couches poreuses.

Selon une configuration, la structure alvéolaire 44 comprend au moins un renfort alvéolaire 44.1, qui présente une section triangulaire ou trapézoïdale, positionné au niveau d'un premier bord parmi les bords avant et arrière 40.1, 40.2. Au niveau de ce premier bord, la couche réflectrice 46 est plaquée contre la couche acoustiquement résistive 42 et reliée à cette dernière.

Le panneau d'atténuation acoustique 40 comprend au moins un renfort en C 50, intercalé entre les couches acoustiquement résistive et réflectrice 42, 46, qui présente une âme 50.1 ainsi que des première et deuxième ailes 50.2, 50.3 situées aux extrémités de l'âme 50.1, la première aile 50.2 étant plaquée contre la couche acoustiquement résistive 42 et reliée à cette dernière, la deuxième aile 50.3 étant plaquée contre la couche réflectrice 46 et reliée à cette dernière. Selon un agencement, le renfort en C 50 est positionné au niveau du bord arrière 40.2. Bien entendu, l'invention n'est pas limitée à cet agencement.

L'âme 50.1, les première et deuxième ailes 50.2, 50.3 du renfort en C 50 forment une pièce d'un seul tenant.

Selon un mode de réalisation, le renfort en C 50 est une préforme de fibres préimprégnées ou non.

La (ou les) couche(s) acoustiquement résistive 42, la (ou les) structure(s) alvéolaire(s) 44, la couche réflectrice 46 ainsi que le (ou les) renfort(s) en C ne sont pas plus décrits car ils peuvent être identiques à ceux de l'art antérieur. Leurs procédés d'obtention ne sont pas plus décrits car ils peuvent être identiques à ceux de l'art antérieur.

Selon une configuration, lorsque le panneau d'atténuation acoustique 40 est fini, les première et deuxième ailes 50.2, 50.3 du renfort en C 50 sont sensiblement parallèles et espacées d'un écartement donné. Les première et deuxième ailes 50.2, 50.3 présentent (entre leurs extrémités libres et l'âme 50.1) des largeurs donnés sensiblement identiques.

Selon l'invention, le panneau d'atténuation acoustique 40 comprend au moins un noyau expansible 52 positionné entre les première et deuxième ailes 50.2, 50.3 d'un renfort en C 50 et configuré pour occuper un premier état non expansé, à une première température, dans lequel le noyau expansible 52 occupe un premier volume ainsi qu'un deuxième état expansé, à une deuxième température supérieure à la première température, dans lequel le noyau expansible 52 occupe un deuxième volume plus important que le premier volume. Selon une configuration, la première température est égale à une température ambiante, de l'ordre de 20°C, et la deuxième température est égale à une température de polymérisation supérieure ou égale à 100 °C.

Selon un premier mode de réalisation, au moins un noyau expansible 52 est réalisé à partir d'un matériau solide comme une mousse expansible.

Selon un deuxième de réalisation, au moins un noyau expansible 52 comprend au moins une vessie contenant un fluide expansible.

Selon un agencement, le noyau expansible 52 présente dans le premier état des formes épousant les formes de l'âme 50.1 ainsi que celles des première et deuxième ailes 50.2, 50.3 du renfort en C 50.

Selon un mode de réalisation, le noyau expansible 52 comporte, dans le premier état, une section sensiblement rectangulaire qui présente une longueur sensiblement égale à l'écartement donné entre les première et deuxième ailes 50.2, 50.3 ainsi qu'une largeur sensiblement égale à celle des première et deuxième ailes 50.2, 50.3.

Le panneau d'atténuation acoustique 40 peut comprendre un seul noyau expansible 52 ou plusieurs noyaux expansibles mis bout à bout. Ainsi, dans le cas d'un panneau d'atténuation acoustique 40 de forme tubulaire, ce dernier peut comprendre un seul noyau expansible qui s'étend sur toute la circonférence de la forme tubulaire ou plusieurs noyaux expansibles 52, mis bout à bout, qui s'étendent sur toute la circonférence de la forme tubulaire.

Selon les cas, au moins un noyau expansible 52 est retiré du panneau d'atténuation acoustique 40 après une étape de polymérisation. En variante, au moins un noyau expansible 52 est positionné de manière permanente dans le panneau d'atténuation acoustique 40.

Selon un mode opératoire, un procédé de fabrication d'un panneau d'atténuation acoustique comprend une première étape de pose d'une couche acoustiquement résistive 42 sur un premier moule, une étape de mise en place d'au moins un renfort en C 50, une étape d'enroulement d'un fil 48 autour de la couche acoustiquement résistive 42, une étape de mise en place d'au moins un noyau expansible 52 entre les première et deuxième ailes 50.2, 50.3 du renfort en C 50, une étape de mise en place de ladite structure alvéolaire 44 sur la couche acoustiquement résistive 42 déjà positionnée, une étape de mise en place de la couche réflectrice 46, une étape de mise en place d'au moins un outillage de polymérisation, un cycle de polymérisation puis une étape de démoulage.

Quel que soit le mode opératoire, un procédé de fabrication d'un panneau d'atténuation acoustique 40 comprend une étape de mise en place d'au moins une couche acoustiquement résistive 42, d'au moins un renfort en C 50 présentant une âme 50.1 ainsi que des première et deuxièmes ailes 50.2, 50.3, d'au moins un noyau expansible 52 entre les première et deuxième ailes 50.2, 50.3 du renfort en C, d'au moins une structure alvéolaire 44 et d'au moins une couche réflectrice 46 ; la structure alvéolaire 44 et le renfort en C 50 étant situés entre la couche acoustiquement résistive 42 et la couche réflectrice 46. Après la mise en place de ces éléments, le procédé comprend une étape de mise en place d'au moins un outillage de polymérisation, un cycle de polymérisation ainsi qu'une étape de démoulage. Dans tous les cas, chaque noyau expansible 52 est mis en place avant le cycle de polymérisation, notamment avant l'étape de mise en place de la structure alvéolaire 44.

Lors du cycle de polymérisation, le noyau expansible 52 se dilate et augmente de volume. L'expansion du noyau expansible 52 lors du cycle de polymérisation lui permet de compenser les phénomènes de foisonnement et d'exercer un effort de compression sur l'âme 50.1 ainsi que sur les première et deuxième ailes 50.2, 50.3 contre respectivement la couche acoustiquement résistive 42 et la couche réflectrice 46. Par ailleurs, le noyau expansible 52 empêche le renfort en C 50 de se déformer et lui permet de reprendre les efforts de compression tendant à rapprocher la couche réflectrice 46 et la couche acoustiquement résistive 42 lors du cycle de polymérisation.

Contrairement à l'art antérieur, le procédé de fabrication ne comprend qu'un seul cycle de polymérisation, ce qui permet de réduire le temps et les coûts de fabrication.

## Revendications

1. Panneau d'atténuation acoustique (40) comportant au moins une couche acoustique résistive (42), au moins une couche réflectrice (46) ainsi qu'au moins une structure alvéolaire (44) et au moins un renfort en C (50) intercalés entre les couches acoustiquement résistive et réflectrice (42, 46), ledit renfort en C (50) comportant une âme (50.1) ainsi que des première et deuxième ailes (50.2, 50.3) en contact respectivement avec les couches acoustiquement résistive et réflectrice (42, 46) ; **caractérisé en ce que** le panneau d'atténuation acoustique (40) comprend au moins un noyau expansible (52) positionné entre les première et deuxième ailes (50.2, 50.3) du renfort en C (50) et configuré pour occuper un premier état non expansé, à une première température, dans lequel le noyau expansible (52) occupe un premier volume ainsi qu'un deuxième état expansé, à une deuxième température supérieure à la première température, dans lequel le noyau expansible (52) occupe un deuxième volume plus important que le premier volume.

2. Panneau d'atténuation acoustique (40) selon la revendication précédente, **caractérisé en ce que** le noyau expansible (52) présente, dans le premier état, des formes épousant celles de l'âme (50.1) ainsi que celle des première et deuxième ailes (50.2, 50.3) du renfort en C (50).

3. Panneau d'atténuation acoustique (40) selon la revendication précédente, **caractérisé en ce que** le noyau expansible (52) comporte, dans le premier état, une section sensiblement rectangulaire qui présente une longueur sensiblement égale à un écartement entre les première et deuxième ailes (50.2, 50.3) ainsi qu'une largeur sensiblement égale à celle des première et deuxième ailes (50.2, 50.3).

4. Panneau d'atténuation acoustique (40) selon l'une des revendications précédentes, **caractérisé en ce que** le panneau d'atténuation acoustique (40) comprend plusieurs noyaux expansibles mis bout à bout.

5. Panneau d'atténuation acoustique (40) selon l'une des revendications précédentes, **caractérisé en ce qu'**au moins un noyau expansible (52) est réalisé à partir d'un matériau solide comme une mousse expansible.

6. Panneau d'atténuation acoustique (40) selon l'une des revendications précédentes, **caractérisé en ce qu'**au moins un noyau expansible (52) comprend au moins une vessie contenant un fluide expansible.

7. Panneau d'atténuation acoustique (40) selon l'une des revendications précédentes, **caractérisé en ce qu'**au moins un noyau expansible (52) est positionné de manière permanente dans le panneau d'atténuation acoustique (40).

8. Panneau d'atténuation acoustique (40) selon l'une des revendications précédentes, **caractérisé en ce que** la première température est égale à une température ambiante, de l'ordre de 20°C, et la deuxième température est égale à une température de polymérisation supérieure ou égale à 100 °C.

9. Procédé de fabrication d'un panneau d'atténuation acoustique (40) selon l'une des revendications précédentes, le procédé de fabrication comportant une étape de mise en place d'au moins une couche acoustiquement résistive (42), d'au moins un renfort en C (50), d'au moins une structure alvéolaire (44) et d'au moins une couche réflectrice (46), chaque structure alvéolaire (44) et chaque renfort en C (50) étant intercalés entre les couches acoustiquement résistive et réflectrice (42, 46), une étape de mise en place d'au moins un outillage de polymérisation, un cycle de polymérisation ainsi qu'une étape de démoulage ; **caractérisé en ce que** le procédé comprend une étape de mise en place d'au moins un noyau expansible (52) entre les première et deuxième ailes (50.2, 50.3) du renfort en C (50) préalablement au cycle de polymérisation, ledit noyau expansible (52) étant configuré pour occuper un premier état non expansé, à une première température, dans lequel le noyau expansible (52) occupe un premier volume ainsi qu'un deuxième état expansé, à une deuxième température supérieure à la première température, dans lequel le noyau expansible (52) occupe un deuxième volume plus important que le premier volume.
